# EUROPÄISCHE PATENTSCHRIFT

(11) **EP 1 760 014 B1**
(45) Veröffentlichungstag und Bekanntmachung des Hinweises auf die Patenterteilung: **21.01.2009**
(21) Anmeldenummer: 06018292.0
(22) Anmeldetag: 01.09.2006
(51) Int. Cl.: B65G 7/08, B65G 7/10, B66F 15/00, B27B 31/04, A01G 23/099, B27B 17/00

(54) **Hebezeug zum Anheben eines länglichen Gegenstandes, insbesondere eines Stammes**
Device for lifting elongated articles, in particular logs
Dispositif pour soulever des objets longs, en particulier des grumes

(30) Priorität: 02.09.2005 DE 202005013911 U
(43) Veröffentlichungstag der Anmeldung: 07.03.2007
(73) Patentinhaber: Kastner, Roland, 61118 Bad Vilbel (DE)
(72) Erfinder: Kastner, Roland, 61118 Bad Vilbel (DE)
(74) Vertreter: Pöhner, Wilfried Anton, Dr.

(56) Entgegenhaltungen:
- AU-B2- 679 804
- CA-A1- 2 437 670
- DE-C- 625 098
- US-A- 4 240 657
- US-A- 4 637 769

## Beschreibung

Die Erfindung betrifft ein Hebezeug zum Anheben eines länglichen Gegenstandes, insbesondere eines Stammes, das Hebezeug bestehend aus Metallprofilen, mit einem Greifer, der an einem Ende etwa rechtwinklig mit einem Hebel sowie mit einer Drehachse verbunden ist, wobei die Drehachse etwa rechtwinklig zum Hebel und zum Greifer ausgerichtet ist und einen verschiebbaren Klemmhebel. Ein derartiges Hebezeug ist aus der DE 625 098 C bekannt.

Schon seit Jahrtausenden verwenden und verwerten Menschen Baumstämme. Nach dem Fällen muss der Baum weiterbearbeitet werden, wozu zählt, den Baum in kürzere Abschnitte zu zersägen und/oder Löcher hineinzubohren. Auch bei der Richtung von Holzbauwerken muss oft das Ende der Balken auf der Baustelle noch weiter bearbeitet werden. Z. B. sind Schlitze, Ausbildung von Zungen oder Zinken erforderlich. Auch viele andere längliche Gegenstände aus anderen Werkstoffen werden so oder ähnlich bearbeitet.

Wenn der längliche Gegenstand auf derselben Ebene gelagert werden soll, auf der auch der bearbeitende Mensch steht, ergeben sich ergonomische Probleme. Weil sich der längliche Gegenstand auf Höhe der Füße des Menschen befindet, muss sich der bearbeitende Mensch zu seinem Werkstück herunter beugen. Diese Haltung ist der Wirbelsäule abträglich und führt auf die Dauer zu körperlichen Schäden. Bereits kurzfristig wird wegen der dadurch bewirkten Ablenkung die Qualität der Arbeit in dieser Haltung leiden.

Das zweite Problem tritt auf, wenn Bohrer oder Kettensägen von oben her den gesamten Querschnitt des zu bearbeitenden Gegenstandes durchdrungen haben und dann die Standfläche erreichen, insbesondere dann, wenn die Standfläche asphaltiert oder gepflastert ist. Wenn die bewegte Kette oder der drehende Bohrer solche Flächen berühren, wirken sie wie ein Schleifstein und beschädigen oder zerstören die Schnittkanten.

Ein drittes Problem ist, dass eine Bügelsäge, also ein hin- und her bewegtes Sägeblatt, durch die Einspannung des Sägeblattes sowie bei manueller Betätigung als Freiraum für den sägenden Menschen einen Freiraum unterhalb der Sägelinie benötigt. Dieser Freiraum fehlt, wenn das zusägende Objekt direkt auf der Standfläche aufliegt.

Deshalb sind bereits aus dem Mittelalter zahlreiche Anordnungen von Lagerböcken bekannt, auf denen die zu sägenden Baumstämme und/oder länglichen Gegenstände während der Bearbeitung positioniert worden sind. Als zweites Hilfsmittel sind Hebel und/oder Seilwinden bekannt, mit denen die zu sägenden Objekte auf diese Böcke gehoben werden.

Aus der DE 625 098 C ist eine Vorrichtung zum Anheben von Baumstämmen bekannt, bestehend aus einem Hebel, einem an seinem unteren angeformten Ende nasenartigen Greifer und einem klauenartig ausgebildeten, Klemmhebel. Von erheblichem Nachteil ist, dass Greifer und Klemmhebel unweigerlich zu Beschädigungen des Holzes Anlass geben, der Greifer nicht unterhalb des Stammes positionierbar und aufgrund der Mehrteiligkeit umständlich in der Handhabung ist.

Bisher nicht bekannt sind einfache, robuste und wirtschaftliche Vorrichzungen, welche beide Funktionen zugleich übernehmen, nämlich das Anheben und das Lagern in der erhobenen Position. Deshalb hat sich die Erfindung die Aufgabe gestellt, die bekannten, L-förmigen Werkzeuge aus Metallprofilen, von denen der kurze Schenkel als Greifer und der lange Schenkel als Hebel benutzt wird, so zu erweitern, dass damit Baumstämme oder andere längliche Gegenstände von der Standfläche angehoben, in eine erhöhte Position verbracht und dort fixiert werden.

Die Erfindung löst dieses Problem dadurch, dass eine Strebe in etwa von der Mitte des Greifers in den Bereich der Mitte des Hebels führt, und der Klemmhebel parallel zum Greifer ausgerichtet ist und eine zu dem Profil der Strebe komplementäre Öffnung aufweist, wobei die Strebe durch die Öffnung verläuft, und der Klemmhebel auf der Strebe verschiebbar ist.

Ein solches, erfindungsgemäßes Hebezeug bietet zahlreiche Vorteile. Er ist sowohl für das Anheben eines länglichen Gegenstandes wie auch für das Lagern einsetzbar. Durch seine Herstellung aus Metallprofilen ist er kostengünstig zu produzieren, vergleichsweise wirtschaftlich und in der Benutzung leicht und platzsparend. Durch Unterstützung des Hebezeugs ist es möglich, Stämme und andere längliche Gegenstände anzuheben und zu lagern, die ein einzelner Mensch nicht mit bloßer Körperkraft anheben könnte. Die Vorrichtung benötigt keine weiteren Hilfsmittel oder zusätzliche Energien. Da sich während der bestimmungsgemäßen Benutzung die einzelnen Elemente des Hebezeugs nicht gegeneinander bewegen, tritt auch kein Verschleiß auf. Lediglich die Unterseite der so genannten "Drehachse" bewegt sich gegenüber der Standfläche. Da es sich hier jedoch nicht um eine Gleitbewegung sondern um eine Abrollbewegung handelt, ist auch an dieser Stelle der Verschleiß sehr begrenzt. Obwohl die "Drehachse" selbst also keine Drehbewegung ausführt, trägt sie diesen Namen, weil die imaginäre Bezugsachse, um die der gesamte Stammhebern beim Anheben schwenkt (dreht), auf der Oberfläche der "Drehachse" entlang wandert. Die "Drehachse" stabilisiert das Hebezeug beim Einschieben des Greifers unter den zu hebenden, länglichen Gegenstand sowie dann, wenn sich während des Anhebevorganges durch Unregelmäßigkeiten am entfernten Ende des zu hebenden Gegenstand der Greifer etwas verschieben sollte.

Aus diesen Gründen ist es eine sinnvolle Zusatzausstattung, die Drehachse mit einer Hülle aus nicht rostendem Stahl zu versehen.

Es wird empfohlen, die Teleskopstange zu fetten, um deren Bedienung zu erleichtern und die Lebensdauer zu erhöhen.

Eine weitere, die Betriebsdauer verlängernde Anwendung von rostfreiem Stahl ist die Strebe sowie der darauf verschiebbare Bereich des Klemmhebels mit der zum Profil der Strebe komplementären Öffnung. Durch das Umklappen der Strebe beim Anheben des länglichen Gegenstandes und das - je nach Spiel zwischen Öffnung im Klemmhebel und Strebe - mehr oder weniger starke Anstoßen des Klemmhebels an die Strebe wird auf den Berührungsflächen eine Lackierung dieser Teile bald abplatzen. Auf den unlackierten Flächen entstehender Rost wird zwar immer wieder bei der bestimmungsgemäßen Benutzung abgestoßen, aber ein rostfreier Stahl würde dieses Problem eliminieren. Der beste Kompromiss zwischen Kosten und Nutzen und damit die Standardversion wird jedoch eine lackierte Stahlkonstruktion sein.

### Die Benutzung aller Varianten beschreibt die Erfindung wie folgt:

Im ersten Schritt wird der Greifer zwischen den anzuhebenden Gegenstand und die Standfläche eingetrieben. Dabei ist der Greifer etwa rechtwinklig zum Gegenstand ausgerichtet und der Klemmhebel befindet in seiner obersten Position. Im nächsten Schritt wird der Klemmhebel durch Anheben gelockert und soweit abgesenkt, bis er auf dem Gegenstand aufliegt. Dann wird die Teleskopstange je nach Größe des zu hebenden Gegenstandes und des sich daraus ergebenen Drehmomentes ausgezogen. Im nächsten Schritt stützt sich der Benutzer mit einem Fuß auf einer Fußstütze auf dem Klemmhebel ab, greift mit wenigstens einer Hand den Griff am Ende des Hebels und verlagert aus dieser Ausgangsposition heraus seinen eigenen Schwerpunkt möglichst weit von der Drehachse. Im nächsten Schritt verschiebt er durch Anziehen der Arme sein Körpergewicht immer weiter auf die Fußraste. Dabei wird der andere, auf der Standfläche befindliche Fuß, entlastet.

Wenn der Benutzer seinen Schwerpunkt ausreichend weit von der Drehachse entfernt hat und wenn sein Körpergewicht ein ausreichendes Drehmoment erzeugt, dann wird sich der Gegenstand von der Standfläche ab. Der Benutzer steuert mit den Armen sowie durch Verlagerung seines Schwerpunktes, mit welchem Drehmoment bezogen auf die Drehachse der Gegenstand angehoben wird.

Mit zunehmendem Anheben des Stammes verringert sich der effektive Abstand zwischen der vertikal nach unten wirkenden Gewichtskraft und der Drehachse des Hebezeugs. Wenn der Winkel zwischen der Strebe und der Vertikalen etwa die gleiche Größe hat, wie der Winkel zwischen Greifer und der Vertikalen, sowie in Abhängigkeit vom Durchmesser des anzuhebenden Gegenstandes ist derjenige Punkt des Hebezyklus erreicht, bei dem sich der Schwerpunkt des anzuhebenden Gegenstandes, bezogen auf seinen Querschnitt, lotrecht oberhalb der Drehachse des Hebezeugs befindet. In dieser Winkelstellung sinkt das Drehmoment zur Betätigung des Hebezeugs, bezogen auf die Drehachse, auf Null. Von diesem Punkt des Bewegungszyklus ab muss der Benutzer nicht mehr den Hebel in Richtung auf die Standfläche herunterziehen, sondern eine in entgegengesetzter Richtung wirkende Kraft aufbringen, damit der Hebel nicht schlagartig auf der Standfläche aufschlägt. In diesem Moment der Kraftrichtungsumkehr entlastet der Gegenstand den Greifer und übt eine Kraft auf den Klemmhebel aus abhängig von der Größe des Spieles zwischen der Öffnung im Klemmhebel und dem dort hindurch laufenden Profil der Strebe verschwenkt der Klemmhebel soweit, bis er mit seinen beiden anderen, zuvor nicht belasteten Kanten an die Strebe anstößt.

Der Benutzer kann jetzt je nach dem Verhältnis zwischen dem Gewicht des Gegenstandes, der Größe des Hebezeugs und der eigenen Leistungsfähigkeit entweder den Hebel langsam der Standfläche soweit nähern, bis die Auflagefläche am Distanzstück die Standfläche berührt oder das Hebezeug loslassen. Dabei ist jedoch zu beachten, dass durch das Gewicht des Gegenstandes der Hebel in eine immer schneller werdende Schwenkbewegung gebracht wird. Das führt dazu, dass das am Hebel angebrachte Distanzstück mit der daran befestigten Auflageverbreiterung mit sehr hoher Geschwindigkeit auf die Standfläche aufprallt, was je nach Beschaffenheit der Standfläche zu Beschädigungen der Oberfläche der Standfläche oder zu defekten Elementen des Hebezeugs. Die Erfindung präferiert einen solchen Verlauf des Absenkens nicht, sondern empfiehlt ganz eindeutig ein geführtes, kontinuierliches Absenken.

Zur Sicherheit der benutzenden Person empfiehlt die Erfindung nachdrücklich, möglichst schon beim Ansetzen des Hebezeugs abzuschätzen, in welchen Punkten der Standfläche der Hebel nach dem Anheben des Gegenstandes auftreffen wird. Um körperlichen Schaden durch den sich herunterbewegenden Hebel zu vermeiden, sollte der Benutzer nur auf einer Seite der späteren Linie des Auftreffens tätig sein. Wenn er z. B. ein Bein über diese Linie hinweg hinausstreckt, kann es vom Hebel getroffen werden.

Möglich ist es, dass je nach Höhe des Distanzstückes und der Beschaffenheit der Standfläche der Fuß des Benutzers noch unter dem Hebel in seiner niedrigsten Position Platz findet.

Die Erfindung empfiehlt der Benutzer jedoch sehr nachdrücklich, möglichst noch vor dem Ansetzen des Hebezeugs zu prüfen, ob die Höhe des Distanzstückes am oberen Ende des Hebels dafür ausreicht, dass seine Schuhe zwischen Hebel und Standfläche Platz haben. Andernfalls möge er den Bewegungsraum des Hebels während des Absenkens noch sorgfältiger überwachen und freihalten.

Die Erfindung schlägt einige vorteilhafte Varianten vor. Ein erfindungsgemäßes Hebezeug ist auch ohne die Trittstufen am Klemmhebel verwendbar, denn der Benutzer kann sich alternativ an der Drehachse abstützen. Durch die Einsparung der Trittstufen werden die Kosten des Hebezeugs reduziert.

Ein weiteres funktionelles Detail der Erfindung ist ein Handgriff auf der Oberseite des Klemmhebels, der mehrfach eingesetzt wird: Zuerst genutzt wird er beim Ansetzen des Hebezeugs, denn falls zwischen Gegenstand und Standfläche ein ausreichend großer Spalt für das Einschieben des Greifers verbleibt, reicht es aus, das gesamten Hebezeug lediglich an diesem Handgriff zu führen. Wenn jedoch der Spalt unterhalb des Stammes für das berührungsfreie Eindringen des Greifers zu klein ist, muss die Führung mittels Handgriff durch Kraftimpulse auf die Drehachse ergänzt werden.

Ein erfindungsgemäßes Hebezeug kann soweit abgesenkt werden, bis der Hebel flach auf der Standfläche aufliegt. Bei einem hohen Maß an Ebenheit verbleibt in diesem Fall jedoch kein Freiraum für die Hand des Benutzers, welche den Handgriff umschließt. Um diesen Freiraum zu schaffen, schlägt die Erfindung die Anbringung eines Distanzstückes vor, welches in die entgegengesetzte Richtung wie der Greifer weist. Dieses Distanzstück wird beim Absenken des Hebels als erstes auf die Standfläche auftreffen, abhängig von seiner Länge schafft es Freiräume für die Hand des Benutzers und/oder die Füße des Benutzers, sofern sie in den Flugkreis des Hebels geraten.

Eine weitere, bedienungserleichternde Variante ist eine herausziehbare Verlängerung, welche sich innerhalb des oberen Endes vom Hebel befindet. Diese Verlängerung kann vor dem Anheben des Stammes teleskopartig nach oben herausgezogen werden. Eine sinnvolle Variante ist es, diese Verlängerung mit einem Handgriff auszurüsten. Falls die Verlängerung nicht gewünscht wird, ist ein Handgriff direkt auf dem Hebel sinnvoll.

Zur Erweiterung der Einsatzmöglichkeiten des Hebezeugs empfiehlt die Erfindung, auf dem Distanzstück eine Auflageverbreiterung zu befestigen. Deren Auflagefläche sollte parallel zur Längsachse des Hebels und parallel zur Drehachse angeordnet werden. Mit dieser Auflagefläche wird ein Einsinken des Distanzstückes in sehr weiche Standflächen verhindert.

Wenn die Standfläche nicht nur weich ist, sondern auch in einigen Bereichen Unebenheiten aufweist, dann wird die Funktionalität des Hebezeugs dadurch weiter gesteigert, dass die Auflageverbreiterung über ein Gelenk oder über zwei kreuzweise zueinander angeordnete Gelenke an das Distanzstück verschwenkbar angebracht wird. Mit dieser vorteilhaften Sonderausstattung passt sich die Auflageverbreiterung kleineren Unebenheiten eben auch eines weichen Bodens an. Dadurch werden Beschädigungen des Bodens reduziert und das Einsinken in die Standfläche vermindert. Wenn die Auflageverbreiterung abnehmbar gestaltet wird, benötigt das Hebezeug beim Arbeiten auf harten Standflächen einen schmaleren Bewegungsraum, als mit der durch die Luft schwenkenden Auflageverbreiterung.

Als konsequente Anwendung des Prinzips der Auflageverbreiterung schlägt die Erfindung zur die Anwendung auf weichen Böden vor, auch die Drehachse mit einer Auflageplatte zu erweitern. Sie sollte verschwenkbar zur Drehachse angeordnet sein und auf der Standfläche aufliegen. Die Achse der Verschwenkung muss orthogonal zum Greifer ausgerichtet werden. Alternativ kann an beiden Enden oder nur an einem Ende der Drehachse eine Auflageplatte montiert werden. Denkbar ist auch eine mittig angeordnete Auflagefläche mit einem Gelenk als Verbindung zur Drehachse.

Eine weitere sinnvolle Zusatzausrüstung eines erfindungsgemäßen Hebezeugs ist es, auf derjenigen Seite des Klemmhebels, die zum gehobenen Gegenstand hinweist, wenigstens einen Fixierdorn vorzusehen. Durch den Fixierdorn wird der angehobene Stamm während der Bearbeitung daran gehindert, sich im Hebezeug weiter zu drehen.

Eine weitere, die Bedienung erleichternde Ausführungsform ist es, das freie Ende des Greifers nach oben hin gerichtet zu krümmen. Diese Form des Endes eines Profils wird auch als Kufe bezeichnet. Sie kann das Einführen des Greifers zwischen Gegenstand und Standfläche erleichtern.

Ein die Funktion verbessernder Zusatz ist es, das Ende des Greifers anzuspitzen. Diese Anspitzung bietet zwei Vorteile, nämlich zuerst ein erleichtertes Einschieben zwischen Gegenstand und Standfläche und zum zweiten auch die zusätzliche Funktionalität, mit dem Hebezeug plattenförmige Gegenstände auf einer Ecke anzuheben. Die Spitze des Greifers fungiert in diesem Fall als gelenkige Verbindung zwischen Hebezeug und Platte; die Länge des Greifers bestimmt den erreichbaren Abstand zwischen Platte und Standfläche.

In dieser Anwendung ist natürlich zu beachten, dass die angehobene Platte nicht nur in sich stabil genug ist, um die einseitige Belastung mit samt einer zusätzlichen dynamischen Reserve zu kompensieren, sondern darüber hinaus noch Reserven aufbietet, um die durch die Bearbeitung einfließenden Kräfte aufnehmen zu können.

In einer weiteren, interessanten Variante wird das Grundprinzip des Hebezeugs dadurch erweitert, dass die Grundelemente Hebel, Greifer, Strebe und Drehachse gelenkig miteinander verknüpft sind. Und zwar ist der Hebel verschwenkbar am Greifer montiert, wobei die Verschwenkachse orthogonal zum Greifer ausgerichtet ist. Die Strebe ist mit ihrer einen Seite am Hebel angelenkt und kann mit ihrer anderen Seite auf dem Greifer an verschiedenen Befestigungspunkten entlang der Längsachse fixiert werden. Als einfachste Ausführungsform ist ein Greifer aus T-förmigem Profil denkbar, in dessen aufrechtstehenden Teil etliche Löcher hintereinander eingebracht sind. Diese Löcher korrespondieren mit einer Bohrung im unteren Ende der Strebe. Durch eine Schraubverbindung kann die Strebe 6 in einem der Bohrungen angeschraubt werden. Je nach ausgewählter Bohrung verändert sich der Winkel zwischen Greifer und Hebel.
Je näher der ausgewählte Befestigungspunkt an der Drehachse liegt, desto kleiner ist der effektive Hebelarm. Bei einer gegebenen Betätigungskraft an dem (senkrecht stehenden) Hebel wird mit geringer werdendem Abstand zwischen Befestigungspunkt und Drehachse die Anhebung eines entsprechend wachsenden Gewichtes möglich. In gleichem Maße sinkt jedoch der erreichbare Hub.

Durch die Verwendung von zwei Exemplaren solches einstellbaren Hebezeug wird es möglich, auch bei der Anhebung von sehr schweren Gegenständen durch die Aufteilung des Gesamthubes in mehrere Zwischenschritte dennoch einen großen Hub zu erreichen.

Dazu wird im ersten Teilschritt mit dem ersten Hebezeug der Gegenstand um einen kleinen Weg angehoben. Wenn er auf diesem Hebezeug in etwas angehobener Position ruht, wird dicht daneben der zweite Hebezeug angesetzt, welcher auf einen etwas größeren Hub als der erste eingestellt worden ist. Da der Stamm bereits etwas angehoben ist, wandert die Drehachse des zweiten Hebezeugs näher an die Mittelachse des zu hebenden Gegenstandes heran, wodurch das zur Betätigung erforderliche Drehmoment sinkt.

Durch die Aufteilung eines langen Gesamthubweges in mehrere Zwischenschritte und mit entsprechend angepasster Einstellung der beiden verwendeten Exemplare des Hebezeugs ist auch bei vergleichsweise sehr hohem Gewicht des zu hebenden Stammes dennoch ein hoher Hubweg zu erreichen.

Als Mehrausstattung schlägt die Erfindung vor, wenigstens ein Rad an der so genannten "Drehachse" lösbar zu befestigen. Zum Transport kann das Hebezeug auf diesem Rad verfahren werden. Damit wird die imaginäre "Drehachse" des Hebezeugs während des Transportes zu einer tatsächlichen Drehachse umfunktioniert.

Die Anwendung des Hebezeugs ist primär in der Forstwirtschaft vorgesehen. Seine Geometrie ermöglicht jedoch auch den Einsatz in vielen anderen Bereichen. Bereits erwähnt ist das Anheben von Holzbalken auf Baustellen für Holzbauwerke wie Häuser, Brücken, Schuppen und Zäune.

Nutzbar ist das Hebezeug für das Anheben von gewichtigen, länglichen Gegenständen aus den verschiedensten Materialien, wie zum Beispiel von Rohren, Stahlbetonelementen, Teilen aus Faserzement oder anderen Verbundwerkstoffen bis hin zu Natursteinen.

Möglich ist das Anheben von Eisblöcken, wenn diese an ihren Enden bearbeitet werden sollen. Z.B. bei der Errichtung von großen Kunstwerken oder bei temporären Bauten in Dauerfrostgebieten.

Prinzipiell sinnvoll ist der Hebezeug zum Anheben von sämtlichen, länglichen Werkstücken, die für das Anheben durch einen Menschen zu gewichtig und/oder zu sperrig sind und die aufgrund ihrer inneren Struktur an ihren beiden Enden alleine unterstützt werden können.

Im Folgenden sollen weitere Einzelheiten und Merkmale der Erfindung anhand von Beispielen näher erläutert werden. Die abgebildeten Beispiele sollen die Erfindung jedoch nicht einschränken, sondern jedoch erläutern.

Die Figuren zeigen:
- **Figur 1**: Ansicht eines Hebezeugs kurz vor dem Unterschieben unter einen anzuhebenden Baum
- **Figur 2**: Hebezeug mit ausgezogener Teleskopstange in Position für die erhöhte Lagerung eines länglichen Gegenstandes
- **Figur 3**: Hebezeug mitsamt Baumstamm, links vor dem Anheben, rechts nach dem Anheben

Die Figuren zeigen im Einzelnen:

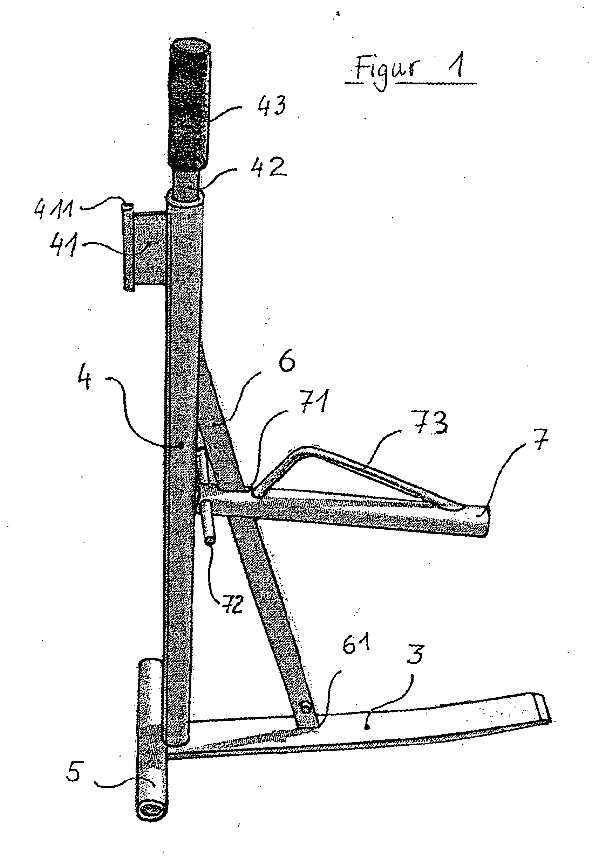

Figur 1 gibt die perspektivische Ansicht auf einen Stammheber in derjenigen Position wieder, in der er zur Aufnahme eines Gegenstandes bereit ist. Links unten ist die Drehachse 5 und ihre Befestigung am Greifer 3 zu erkennen. Der Greifer 3 ist an seinem anderen Ende kufenartig nach oben gekrümmt und mit einer Spitze versehen, mit der er in den Spalt zwischen der Standfläche und dem zu hebenden Gegenstand 1 eindringt. Der Hebel 4 ist senkrecht auf dem Greifer 3 befestigt und mit diesem zusätzlich noch durch die Strebe 6 verbinden.

Auf der Strebe 6 ist der Klemmhebel 7 in seiner obersten, möglichen Position zu erkennen. Oben auf dem Klemmhebel 7 ist der Handgriff 73, an den Seiten zwei Fußrasten 72 und nahe dazu die Öffnung 71 angeordnet, durch welche die Strebe 6 verläuft. In der hier gezeichneten Variante hat die Strebe 6 auf dem Greifer 3 nur einen einzigen Befestigungspunkt 61. Am oberen Ende des Hebels 4 ist das Distanzstück 41 mit einer Auflageverbreiterung 411 eingezeichnet sowie die im dargestellten Zustand zum größten Teil in den Hebel 4 eingeschobene Verlängerung 42 mit dem schwarzen Handgriff 43.

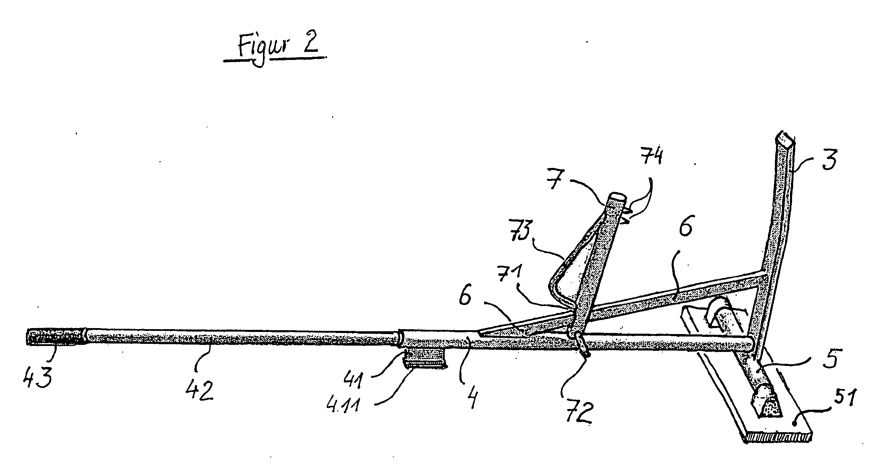

Figur 2 zeigt den Stammheber in derjenigen Position, in der er einen Gegenstand in angehobener Position trägt, jedoch im Unterschied zu Figur 1 um 90° verschwenkt. Eingezeichnet ist die Verlängerung 42 in herausgezogenem Zustand. Das Distanzstück 41 mit der daran befestigten Auflageverbreiterung 411 befindet sich nunmehr etwa in der Mitte des insgesamt wirkenden Hebels, bestehend aus Hebel 4, Verlängerung 42 und Handgriff 43. Zusätzlich eingetragen ist die Variante mit einer Auflageplatte 51 an der Drehachse 5, hier an beiden Seiten schwenkbar gelagert.

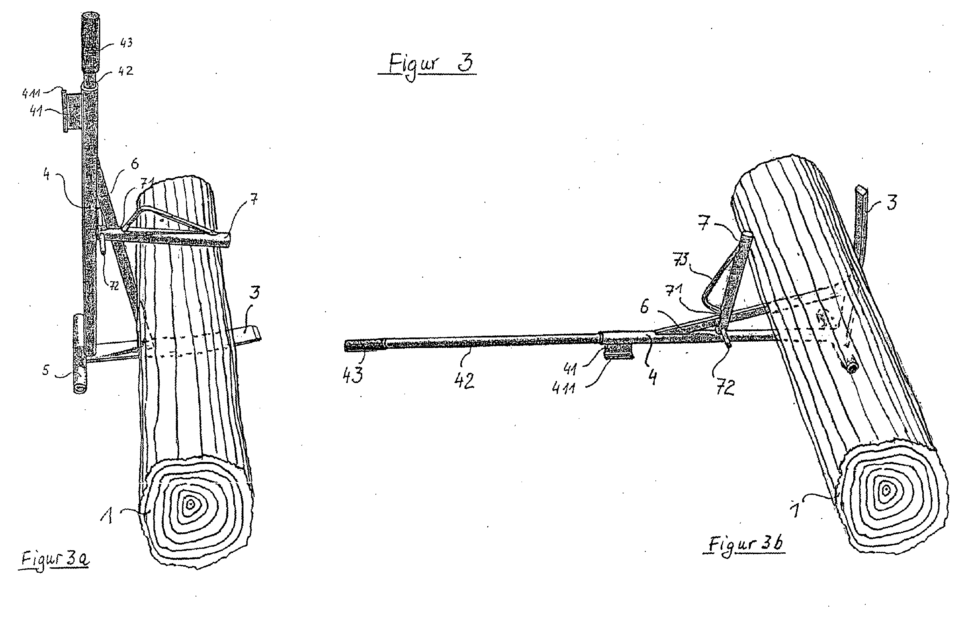

In Figur 3 ist der Stammheber in den beiden Positionen, die Figur 1 und Figur 2 zeigen, kopiert und darauf als zu hebender Gegenstand 1 jeweils ein Baumstamm eingezeichnet. In der linken Teilfigur 3a befindet sich der Stammheber mit seinem Greifer 3 bereits unterhalb des anzuhebenden Baumstammes 1. Zu erkennen ist, dass der Klemmhebel 7 auf den Stamm 1 abgesenkt worden ist. Im gezeigten Beispiel, ist der maximal mögliche Durchmesser eines Gegenstandes 1 dargestellt, den ein Stammheber mit den gezeichneten Proportionen anheben kann.

In der rechten Teilfigur 3b ist derselbe Stammheber dargestellt. Er ist jedoch bereits um 90° verschwenkt, sodass der Stamm 1 angehoben ist. Zu erkennen ist, dass der Stamm 1 auf der Strebe 6 lastet und sich nach vorne zu an den Klemmhebel 7 anlehnt. Die Verlängerung 42 ist ausgezogen und der Hebel 4 ruht auf dem Distanzstück 4 und der Auflageplatte 411.

### Bezugszeichenliste

- 1 =: länglicher Gegenstand
- 3 =: Greifer, befestigt an Hebel 4 und Drehachse 5
- 4 =: Hebel, befestigt an Greifer 3
- 41 =: Distanzstück, befestigt an Hebel 4
- 411=: Auflageverbreiterung, befestigt an Distanzstück 41
- 42: = Verlängerung, in Hebel 4 angeordnet
- 43: = Handgriff, auf Verlängerung 42 befestigt
- 5 =: Drehachse, befestigt an Hebel 4 und Greifer 3
- 51 =: Auflageplatte, an Drehachse 5 befestigt
- 6 =: Strebe, verbindet Greifer 3 mit Hebel 4
- 61 =: Befestigungspunkt von Strebe 6 auf Greifer 3
- 7 =: Klemmhebel, auf Strebe 6 angeordnet
- 71 =: Öffnung in Klemmhebel 7
- 72 =: Fußraste, auf Klemmhebel 7
- 73 =: Handgriff, auf Klemmhebel 7
- 74 =: Fixierdorn, auf Klemmhebel 7

## Patentansprüche

1. Hebezeug zum Anheben eines länglichen Gegenstandes (1), insbesondere eines Stammes, das Hebezeug bestehend aus Metallprofilen, mit
- einem Greifer (3), der an einem Ende etwa rechtwinklig mit einem Hebel (4) sowie mit einer Drehachse (5) verbunden ist, wobei die Drehachse (5) etwa rechtwinklig zum Hebel (4) und zum Greifer (3) ausgerichtet ist und einem verschiebbaren Klemmhebel (7),
**dadurch gekennzeichnet, dass**
- eine Strebe (6) in etwa von der Mitte des Greifers (3) in den Bereich der Mitte des Hebels (4) führt,
- und der Klemmhebel (7) parallel zum Greifer (3) ausgerichtet ist und eine zu dem Profil der Strebe (6) komplementäre Öffnung (71) aufweist,
- wobei die Strebe (6) durch die Öffnung (71) verläuft, und der Klemmhebel (7) auf der Strebe (6) verschiebbar ist.

2. Hebezeug nach Anspruch 1, **dadurch gekennzeichnet, dass** am Klemmhebel (7) in der Nähe der Öffnung (71) wenigstens eine Fußraste (72) befestigt ist, welche parallel zur Drehachse (5) ausgerichtet ist.

3. Hebezeug nach den vorhergehenden Ansprüchen, **dadurch gekennzeichnet, dass** auf der vom Greifer (3) abgewandten Seite des Klemmhebels (7) ein Handgriff (73) angeordnet ist.

4. Hebezeug nach den vorhergehenden Ansprüchen, **dadurch gekennzeichnet, dass** auf dem Hebel (4) ein Distanzstück (41) befestigt ist, welches in die zum Greifer (3) entgegengesetzte Richtung weist.

5. Hebezeug nach den vorhergehenden Ansprüchen, **dadurch gekennzeichnet, dass** sich innerhalb des Hebels (4) eine teleskopartig herausziehbare Verlängerung (42) befindet, auf deren Ende ein Handgriff (43) befestigt sein kann.

6. Hebezeug nach den vorhergehenden Ansprüchen, **dadurch gekennzeichnet, dass** auf dem Distanzstück (41) eine Auflageverbreitung (411) befestigt ist,
- deren Auflagefläche parallel zur Längsachse des Hebels (4) und senkrecht zum Distanzstück (41) ausgerichtet ist,
- wobei die Auflageverbreiterung über ein Gelenk oder über zwei kreuzweise zueinander angeordnete Gelenke gegenüber dem Distanzstück verschwenkbar sein kann und/oder
- abnehmbar sein kann.

7. Hebezeug nach einem der vorhergehenden Ansprüche, **dadurch gekennzeichnet, dass** auf Drehachse (5) wenigstens eine Auflageplatte (51) verschwenkbar angeordnet ist,
- die auf der Standfläche aufliegt und
- deren Verschwenkachse orthogonal zum Greifer (3) ausgerichtet ist.

8. Hebezeug nach einem der vorangehenden Ansprüche, **dadurch gekennzeichnet, dass** die zum Greifer (3) hin weisende Seite des Klemmhebels (7) mit wenigstens einem Fixierdorn (74) versehen ist.

9. Hebezeug nach einem der vorhergehenden Ansprüche, **dadurch gekennzeichnet, dass** das von der Drehachse (5) weg weisende Ende des Greifers (3)
- nach oben hin weisend leicht gekrümmt (angekuft) ist
und/oder
- am Ende ausgespitzt ist.

10. Hebezeug nach einem der vorhergehenden Ansprüche, **dadurch gekennzeichnet, dass** der Hebel (4) verschwenkbar am Greifer (3) montiert ist, wobei die Verschwenkachse orthogonal zum Greifer (3) ausgerichtet ist
- und dabei die Strebe (6) verschwenkbar am Hebel (4) angelenkt ist
- und die Strebe (6) auf dem Greifer (3) an verschiedenen Punkten (61) entlang der Längsachse befestigbar ist.

11. Hebezeug nach einem der vorhergehenden Ansprüche, **dadurch gekennzeichnet, dass** an der Drehachse (5) wenigstens ein Rad lösbar befestigt werden kann, wobei die Drehachse (5) des Hebezeugs auch die Drehachse jedes Rades bildet.

12. Anwendung eines Hebezeugs nach den vorhergehenden Ansprüchen, **dadurch gekennzeichnet, dass**
- der Greifer (3) zwischen den anzuhebenden Gegenstand (1) und die Standfläche eingetrieben wird, wobei der Greifer (3) rechtwinklig zum Gegenstand (1) ausgerichtet wird und sich der Klemmhebel (7) in seiner obersten Position befindet und dann
- der Klemmhebel (7) auf den Gegenstand (1) abgesenkt wird,
- die Teleskopstange (42) ausgezogen wird,
- der Benutzer einen Fuß auf einer Fußraste (72) abstützt und mit wenigstens einer Hand den Griff (43) ergreift,
- seinen Schwerpunkt möglichst weit von der Drehachse entfernt,
- sein Körpergewicht zunehmend auf die Fußraste (72) verlagert und dann
- die Schwenkbewegung durch kontinuierliche Verschiebung seines Schwerpunktes steuert, wobei er zuerst seinen Schwerpunkt auf den Gegenstand (1) zu bewegt und dann wieder vom Gegenstand (1) entfernt, jedoch zur anderen Richtung, vom Hebezeug weg weisend.

13. Anwendung von zwei verstellbaren Hebezeugs nach Anspruch 12, **dadurch gekennzeichnet, dass**
- zuerst ein Hebezeug auf einen kleinen Abstand zwischen dem Befestigungspunkt (61) der Strebe (6) auf dem Greifer (3) und der Drehachse (5) einjustiert wird und
- dann der Gegenstand (1) damit angehoben wird und darauf ruht
- und dann ein zweites Hebezeug auf einen größeren Abstand zwischen Befestigungspunkt (61) und Drehachse (5) eingestellt wird und im nächsten Schritt
- der Gegenstand (1) damit in eine gegenüber der Standfläche höhere Position angehoben wird.

## Claims

1. Lifting gear for lifting an elongated object (1), in particular a log, the lifting gear consisting of metal profiles, comprising
- a gripper (3), which, at one end, is connected approximately at right angles to a lever (4) and to a fulcrum (5), said fulcrum (5) being oriented approximately at right angles to the lever (4) and to the gripper (3), and a slideable clamping lever
**characterised in that**
- a rod (6) leads approximately from the centre of the gripper (3) into the region of the centre of the lever (4),
- and the clamping lever (7) is oriented parallel to the gripper (3) and has an opening (71) that is complementary to the profile of the rod (6),
- the rod (6) passing through the opening (71), and the clamping lever (7) being slideable on the rod (6).

2. Lifting gear according to claim 1, **characterised in that** at least one foot rest (72), which is oriented parallel to the fulcrum (5), is fixed to the clamping lever (7) in the vicinity of the opening (71).

3. Lifting gear according to the preceding claims, **characterised in that**, a handle (73) is disposed at that side of the clamping lever (7) facing away from the gripper (3).

4. Lifting gear according to the preceding claims, **characterised in that**, a spacer (41), which points in the opposite direction to the gripper (3), is fixed on the lever (4).

5. Lifting gear according to the preceding claims, **characterised in that** a telescopically extendable extension (42), on the end of which a handle (43) can be fixed, is located within the lever (4).

6. Lifting gear according to the preceding claims, **characterised in that**, a contact widener (411) is fixed on the spacer (41).
- the contact surface of which is oriented parallel to the longitudinal axis of the lever (4) and perpendicular to the spacer (41)
- the contact widener being pivotable via a joint or via two joints arranged crosswise with respect to one another, and/or
- being removable.

7. Lifting gear according to one of the preceding claims, **characterised in that**, on the fulcrum (5), at least one contact plate (51) is pivotably arranged,
- which rests on the base surface and
- the pivot axle of which is oriented so as to be orthogonal to the gripper (3).

8. Lifting gear according to one of the preceding claims **characterised in that that** side of the clamping lever (7) which faces the gripper (3) is provided with at least one fixing pin (74).

9. Lifting gear according to one of the preceding claims, **characterised in that that** end of the gripper (3) that faces away from the fulcrum (5).
- is slightly upwardly curved and/or
- is pointed at the end.

10. Lifting gear according to one of the preceding claims **characterised in that** the lever (4) is pivotably mounted on the gripper (3), the pivot axis being oriented orthogonally to the gripper (3)..
- and the rod (6) being pivotably articulated on the lever (4)
- and the rod (6) on the gripper (3) being fixable at various points (61) along the longitudinal axis.

11. Lifting gear according to one of the preceding claims, **characterised in that** at least one wheel can be detachably fixed on the fulcrum (5), the fulcrum (5) of the lifting gear also forming the fulcrum of said wheel.

12. Application of the lifting gear according to the preceding claims,
**characterised in that**
- the gripper (3) is forced between the object (1) to be lifted and the base surface, the gripper (3) being oriented at right angles to the object (1) and the clamping lever (7) being in its topmost position, and then
- the clamping lever (7) is lowered onto the object (1),
- the telescopic rod (42) is extended,
- the user supports one foot on a foot rest (72) and grips the handle (43) with at least one hand,
- removes his centre of gravity being as far as possible from the fulcrum,
shifts his body weight increasingly onto the foot rest (72), and then
- controls the pivot movement by continually displacing his centre of gravity, while first moving his centre of gravity towards the object (1) and then removing it from the object (1) again, but facing away from the lifting gear in the other direction.

13. Application of two adjustable lifting gears according to claim 12,
**characterised in that**
- first a lifting gear is adjusted to a small distance between the fixing point (61) of the rod (6) on the gripper (3) and the fulcrum (5) is adjusted, and
- then the object (1) is lifted therewith and rests thereon
- and then a second lifting gear is adjusted to a larger distance between the fixing point (61) and fulcrum (5), and in the next step
- the object (1) is thereby lifted to a higher position with respect to the base surface.

## Revendications

1. Palan de manutention destiné à soulever un objet de forme allongée (1), notamment un tronc, ce palan de manutention consistant en profils métalliques,
• avec une pince (3), qui est reliée à une de ses extrémité, à peu près à angle droit, à un levier (4), ainsi qu'à un axe rotatif (5), sachant que cet axe rotatif (5) est orienté à peu près à angle droit par rapport au levier (4) et par rapport à la pince (3), et avec un levier de serrage pouvant être poussé (7),
**caractérisé par le fait**
• **qu'**un tirant (6) conduit à peu près du milieu de la pince (3) à la zone du milieu du levier (4),
• et **que** le levier de serrage (7) est orienté parallèlement à la pince (3) en présentant une ouverture complémentaire (71) par rapport au profil du tirant (8),
• sachant que le tirant (8) passe à travers l'ouverture (71) et que le levier de serrage (7) peut glisser sur le tirant (6).

2. Palan de manutention selon la revendication 1 **caractérisé par le fait qu'**au moins un repose-pied (72) orienté parallèlement à l'axe rotatif (5) est fixé sur le levier de serrage (7) à proximité de l'ouverture (71).

3. Palan de manutention selon les revendications précédentes **caractérisé par le fait qu'**une poignée (73) est disposée sur le côté du levier de serrage (7) opposé à la pince (3).

4. Palan de manutention selon les revendications précédentes **caractérisé par le fait qu'**une entretoise (41) orientée dans la direction opposée à celle de la pince (3) est fixée sur le levier (4).

5. Palan de manutention selon les revendications précédentes **caractérisé par le fait qu'**il y a, à l'intérieur du levier (4), une rallonge (42) de type télescopique à l'extrémité de laquelle une poignée (43) peut être fixée.

6. Palan de manutention selon les revendications précédentes **caractérisé par le fait qu'**un élargissement de support (411) est fixé sur l'entretoise (41),
• dont la surface de support est orientée parallèlement à l'axe longitudinal du levier (4) et à la verticale de l'entretoise (41),
• sachant que l'élargissement du support peut être, par l'intermédiaire d'une articulation ou de deux articulations disposées en croix l'une par rapport à l'autre, pivoté par rapport à l'entretoise et/ou
• démonté.

7. Palan de manutention selon une des revendications précédentes, **caractérisé par le fait qu'**au moins une plaque de support (51) peut être disposée de façon pivotante sur l'axe rotatif (5),
• qui repose sur la surface d'appui et
• dont l'axe de pivotement est orienté de façon orthogonale par rapport à la pince (3).

8. Palan de manutention selon une des revendications précédentes, **caractérisé par le fait que** le côté du levier de serrage (7) orienté en direction de la pince (3) est pourvu d'au moins un tenon de fixation (74).

9. Palan de manutention selon une des revendications précédentes, **caractérisé par le fait que** l'extrémité de la pince (3) s'éloignant de l'axe rotatif (5)
• est légèrement recourbé vers le haut et/ou
• est taillé en pointe à l'extrémité.

10. Palan de manutention selon une des revendications précédentes, **caractérisé par le fait que** le levier (4) est monté de façon pivotante sur la pince (3), sachant que l'axe de pivotement est orienté de façon orthogonale par rapport à la pince (3)
• et que le tirant (6) est à cette occasion articulé de façon pivotante sur le levier (4)
• et que le tirant (6) peut être fixé sur la pince en différents points (61) le long de l'axe longitudinal.

11. Palan de manutention selon une des revendications précédentes, **caractérisé par le fait qu'**au moins une roue peut être fixée de façon détachable sur l'axe rotatif (5), sachant que l'axe rotatif (5) du palan de manutention forme également l'axe rotatif de chaque roue.

12. Utilisation d'un palan de manutention selon une des revendications précédentes, **caractérisé par le fait**
• **que** la pince (3) est rentrée entre l'objet devant être soulevé (1) et la surface d'appui, sachant que la pince (3) est orientée à angle droit par rapport à l'objet (1) et que le levier de serrage (7) se trouve dans sa position supérieure et qu'alors
• le levier de serrage (7) est abaissé sur l'objet (1),
• la tige télescopique (42) est sortie,
• l'utilisateur s'appuie avec un pied sur le repose-pied (72) et saisit la poignée (43) avec au moins une main,
• éloigne son centre de gravité le plus loin possible de l'axe rotatif,
• déplace le poids de son corps de plus en plus sur le repose-pied (72) et ensuite
• commande le mouvement de pivotement à travers un déplacement continu de son centre de gravité, sachant qu'il déplace d'abord son centre de gravité vers l'objet (1) et l'éloigne ensuite de l'objet (1), cependant dans l'autre direction, en s'éloignant du palan de manutention.

13. Utilisation de deux palans de manutention réglables selon la revendication 12, **caractérisée par le fait**
• **qu'**un palan de manutention est d'abord ajusté à une faible distance entre le point de fixation (61) du tirant (6) sur la pince (3) et l'axe rotatif (5) et
• **que** l'objet est ainsi soulevé et repose dessus
• et **qu'**un second palan de manutention est alors réglé à une distance plus grande entre le point de fixation (61) et l'axe rotatif (5) et que, dans l'étape suivante,
• l'objet (1) est ainsi soulevé à une position supérieure par rapport à la surface d'appui.
